# EUROPEAN PATENT SPECIFICATION

(11) **EP 4 108 842 B1**
(45) Date of publication and mention of the grant of the patent: **23.07.2025**
(21) Application number: 22177368.2
(22) Date of filing: 06.06.2022
(51) Int. Cl.: E03C 1/12, F16L 55/027, E03B 7/08, E03C 1/10, F16L 39/00, F16L 41/03, F24D 17/00

(54) **FLUSHING SYSTEM**
SPÜLSYSTEM
SYSTÈME DE CHASSE D'EAU

(30) Priority: 21.06.2021 GB 202108881
(43) Date of publication of application: 28.12.2022
(73) Proprietor: Sol Microtek Ltd, Lichfield WS14 9TZ (GB)
(72) Inventor: Price, Sean, Cheltenham, GL542QB (GB)
(74) Representative: Clarke, Alan

(56) References cited:
- EP-A1- 2 210 985
- EP-A1- 3 101 183
- DE-A1- 102014 113 914
- GB-A- 2 452 311
- US-A- 5 622 207

## Description

The present invention relates to systems, typically fluid systems, where flushing of one or more components of the system is desirable. More particularly, it relates to systems for flushing fluids, such as water, through or away from a component to avoid, prevent, or reduce the opportunity for stagnant fluid to accumulate.

There is, in many countries, a regulatory requirement making it mandatory to take action in water systems to prevent the growth of Legionella bacteria. A part of this is the prevention of water from stagnating in pipework, tanks, and taps etc. Thus, those with responsibility for water systems in public buildings, factories, commercial premises, hospitals, care-homes etc. are generally required by the relevant safety authorities to flush through their water systems on a regular basis, e.g. daily, weekly or monthly to prevent any such stagnation. For example, in the UK, the Health and Safety Executive guidance on the control of Legionella bacteria in hot and cold water systems states that 'Dutyholders are required to prevent or control the risk from exposure to legionella. Precautions include physical methods such as regular movement of hot and cold water in distribution pipework, regular flushing of outlets to ensure water cannot stagnate in the hot and cold water systems'. Typically, employers in the UK are encouraged to flush through water taps and showers on their premises for at least two minutes on a weekly basis. This is especially important for water outlets that are otherwise infrequently used.

Often such flushing is done manually- by an employee physically turning on water taps, timing a two-minute flush and possibly, for a hot-water tap, recording the water temperature attained at the end of the flush. There is now a move to automate these flushes as doing so by a manual method is very labour intensive. Sometimes an automated flush will be done through the tap/shower itself. However, this requires automatic flush outlets to be fitted, at significant expense, and comes with a potential risk of scalding or flooding as the water flows, unsupervised, into the basin/shower tray, etc. A power source to the tap fitting is also required, which adds to the expense where this is not available.

To avoid retrofitting premises with expensive flushing outlets, a less expensive and potentially safer solution is to fit an auto-flushing valve into the pipework such that the water flushes directly down a drain. This solution can be easily retrofitted into existing water systems. Typically, the water supply pipe to the tap would be cut and a three-way Tee-piece fitted to reconnect the pipe to the outlet but also to provide an extra pipe run to the auto-flushing valve and then on to a drain. Document DE 10 2014 113914 A1 discloses a drinking water tap with a unit installed between a water pipe and a tap. The device enables automated flushing to ensure fresh water supply. Document EP 3 101 183 A1 discloses a flushing pipe, which allows the flow of a main pipeline to be redirected into an branch inner pipe with stagnant water with the help of a venturi.

However, there is a problem with this approach. In a retrofit to an existing water outlet, the take-off point tapped into the water supply pipe that diverts the fresh water to the drain is often necessarily fitted some distance upstream of the tap or other outlet, due simply to the physical layout of the plumbing arrangement and the surrounding fixtures and fittings causing an inability to get very close to the body of the tap or shower head. In such a situation the pipework downstream of the valve - all the way to the outlet - will not be flushed out when the valve opens to the drain. The water trapped within this section of pipework is likely to become stagnant. This section of pipework that remains unflushed is known in the water industry as a 'dead-leg'.

Embodiments of the invention have the object of addressing one or more of the above shortcomings of the background art.

According to a first embodiment of the present invention there is provided a flushing system for flushing fluid through a primary pipe between a first point on the primary pipe, and a second point downstream thereof, the system comprising of an additional, inner pipe arranged, in use, to sit within the primary pipe, and having an open port at the second point, and wherein a fluid path is provided to allow fluid to flow down one of the primary or additional pipes, through the open port, and back through the other pipe to the first point, and further wherein an exit port is provided at the first point for the fluid, wherein the system comprises of a unit, suitable for fitting to the primary pipe at the first point, the unit having at least three ports, wherein a first port is adapted to be connected to an upstream portion of the primary pipe, a second port is adapted to be connected to a downstream portion of the primary pipe, and wherein the exit port comprises of the third port.

In some embodiments the fluid will be water, and the system will be used to flush water through the primary pipe that is sitting between the first and the second points. Advantageously, the second point may be arranged to be in the vicinity of a tap, or other water outlet. Thus, when flushed using a flushing system as described herein any standing water in the pipe can be moved through to the exit port and through to a drain. This eliminates or reduces the need for the tap or other outlet to be turned on to flush the system, whilst still being able to provide a substantially complete system flush, and so comply with Legionella prevention requirements.

Embodiments of the invention thus provide a convenient unit that may be installed as a fitting into an existing primary pipe. The embodiments may be formed such that the first and second ports have a diameter similar to that of the primary pipe into which it is to be fitted, thus allowing for standard (e.g. commonly available) plumbing fittings to be used

In some embodiments the system or unit comprises means, for directing fluid flowing into the first port, to flow only through the inner pipe towards the second point, and wherein a fluid flow path exists between the second point, back along the primary pipe, into the second port and then into the exit port.

Thus, in such embodiments, when activated fluid will flow from the primary pipe upstream of the first point through into the first port, and then into the inner pipe, to the open port thereof, and then back around the outside of the inner pipe, but inside the primary pipe, into the second port and from there out through the third, exit port, where it will be directed generally through a valve, as described below, and then typically into a drain. When fluid is drawn through the primary pipe due to, for example, a downstream tap being opened, the fluid will flow from the primary pipe, into the first port and then into the inner pipe, and then from the open port thereof at the second point back into the primary pipe and onwards, in the same direction, to the tap. Thus, the tap is able to function as normal.

To direct the fluid from the primary pipe and the first port to the inner pipe at the first point, such embodiments may have a constriction, such as a funnel, between the inside of an outer pipe, and an entrance port to the inner pipe. It may thus funnel the fluid down from the primary pipe to the inner pipe. The outer pipe here may be the primary pipe itself, or more conveniently a pipe that forms part of the unit that may be spliced into the primary pipe, said outer pipe being of larger diameter than the inner pipe.

In some embodiments the additional, inner pipe provides a flow path from the second point within the primary pipe to the exit port, whereby the additional inner pipe passes through the second port of the primary pipe and terminates at the third port to provide the exit port. In these embodiments, when a flush in in operation, the fluid will flow from upstream of the first point, through the primary pipe into the first port, then will flow in the unit around the outside of the inner pipe and out through the second port, along the primary pipe to the second point, where it will then flow through the open port of the inner pipe, and then flow inside the inner pipe back to the third port and the exit. Thus, in such embodiments, when fitted into a primary pipe, a fluid path exists from the first port to the second port, and then into the downstream portion of the primary pipe. In such embodiments the fluid flow direction is the reverse of the embodiment mentioned above. In this embodiment no constriction is needed in the unit for funnelling the flow from the primary pipe to the inner pipe.

Again, a valve may be mounted at the exit, at or after the third port, or downstream thereof to control the flow of fluid to a drain.

Advantageously, in preferred embodiments, the valve may be an automatic valve. It may be located at, or downstream of the third, exit port, to allow fluid to flow, and hence flush the primary pipe. The automatic valve may be controlled by various means. These may include a timer, set to provide a flush for a predetermined time at intervals, such as daily, every few days, weekly, or some other such interval. The valve may also be controllable remotely, e.g. via a radio or wired link. It may be controlled by a control station that is also controlling other such valves within a facility. The valve may have a controller that is connected to the internet, thus allowing control over the internet. It may also be controlled, for example, by an application on a mobile device, such as a mobile phone.

In some embodiments there is a fourth port provided, located upstream of the third port, and which is connected to an automatic valve, and which has a fluid path direct to the first port, to allow flushing of water primarily present in the primary pipe upstream of the exit port when the automatic valve to which it is connected is open. This fourth port is positioned between the first port and the third port, and provides a direct connection to the first port to allow a flush of the primary pipe upstream of the connection of the embodiment to the primary pipe, when the automatic valve to which it is connected is opened. Such a flush is essentially a flush of the type described in relation to the prior art flushing system, and incorporation of this, along with the flushing system using the inner pipe as described above, allows a high- pressure flush of the upstream portion of the primary pipe, without having to flow through the narrower additional pipe, whilst also allowing a flush of the downstream part of the primary pipe in a manner described above.

In some such embodiments having four ports, the valve connected to the fourth port may be the same valve as connects to the third port. In such embodiments the third and fourth ports are connected together at some point upstream of the valve. Other embodiments may use separate valves connected to each of the third and fourth ports, allowing independent control thereof.

In some embodiments having a single valve connected to both the third and fourth port, the system may further comprise a constriction in a flow path from the fourth port to the valve, and wherein a flow path from the third port to the valve connects at the constriction, to form a venturi that acts to draw fluid through the third port as fluid flows from the fourth port. In such embodiments activation of the valve to allow flow increases the flow rate through the inner pipe and out through the third port over that achievable by having a straightforward connection from the third port to a pipe coming from the fourth port.

Advantageously, the additional, inner pipe may be a flexible pipe. As, when in installed into a primary pipe, there will be very little pressure differential between the inside of the inner pipe and the outside, within the primary pipe, the additional pipe does not need to be a particularly strong, pressure-bearing pipe, but can be e.g. a thin-walled plastic or metal pipe of suitable flexibility and, when used in a water system, compatibility with potable water systems.

Preferably the additional pipe is stiff enough to allow it to be pushed down the primary pipe during fitting, whilst still being flexible enough to go around bends etc., although in those embodiments where the fluid flow is funnelled from the primary pipe through the inner pipe at the first point the inner pipe need not be stiff enough to be pushed through, as it may rely on water pressure to push the pipe along to the second point. Thus, in such embodiments, a thin polythene pipe or the like may be used. Advantageously, the additional, inner pipe may be sized so as to feed into a tap fitting or other such outlet, so that it flushes fluid from as much of the downstream region of the primary pipe as is practicable. The additional inner pipe may be made from plastic, or may be a copper pipe, or may be made from any other suitable material. The additional, inner pipe may typically have an outside diameter of between 5mm and 10mm, such as 6mm, although pipes outside of this range, may be used as appropriate.

In some embodiments the inner pipe is sized to occupy between approximately a quarter and a half of the cross-sectional area within the primary pipe.

Embodiments of the invention may be used to flush water feeds going into taps or other outlets, and typically may be used where there is a desire or legal requirement to flush standing water from a pipe. It may be used on its own, or may be used in conjunction with a prior art flushing system, which may typically comprise of a port from a pipe that goes to an automatic valve for venting to a drain. As explained above, such prior art systems are often fitted some distance, such as between several centimetres, up to possibly a metre or more, from the tap, thus leaving the water sitting between the fitting and the outlet unflushed. This is sometimes called the "dead leg" of a prior art flushing system, as mentioned above. The use of the present invention may hugely reduce, or even eliminate the dead leg.

When used where an existing flushing system is used, the exit port may be connected into the existing flushing system, upstream of the existing valve. Thus, when the existing valve is operated, a flow path will exist through the flushing system of the present invention, and down through the existing valve to a drain, as fluid is induced to flow out of the exit port. It will thus flush both the pipe upstream of the first point, and also the dead leg.

In such embodiments that also use an automatic valve in a prior art flushing system of the type described above, then the exit port may be connected to a venturi located in the drain of the prior art system, preferably upstream of the valve. Thus, fluid flow caused by the pre-existing, prior art flushing system being activated will tend to cause a low pressure in the venturi which will act to suck water down through the exit port of the flushing system of this embodiment, improving the flow rate as compared to having a straight connection into the drain pipe of the existing system. This is, of course, similar in concept to use of a venturi as discussed above, but in this case the embodiment makes use of an existing flushing system. Of course, as water passes through the exit port it ensures that water flows through the dead leg section of pipework, thus acting to flush it through.

Of course, in some embodiments of the present invention that are installed where a prior art flushing system of the type described above is also in place, each system may have its own valve. The valves may be arranged to be driven together, or may be driven independently.

It will be appreciated that such a prior art flushing system may be already installed when an embodiment of the present invention is installed, or such a prior art flushing system may be installed at the same time as installing an embodiment of the present invention. Of course, some embodiments of the present invention can be installed and operated without a prior art system being present at all.

The ports of the unit may be formed from a standard sized plumbing pipe for example, such as 15mm or 22mm outside diameter pipe. The ports may have screw, crimp or push fittings for attachment to other pipework, such as the primary pipe, or a drainage pipe.

In some embodiments the additional, inner pipe has a fitting or form at the open port that is shaped to induce a swirl as water flows through the port. By inducing a swirl as water being flushed is passing through the open port into or out from the inner pipe it will tend to increase the pickup of water just further downstream of the second point. If the second point was in the fitting of a tap or other outlet it would also help to clear water in there also.

According to a further aspect of the invention there is a provided a method of installing a flushing system as described herein into a primary pipe, the system having at least three ports and an inner pipe, the method comprising:
a) cutting a section out of a primary pipe to leave an upstream and a downstream section thereof;
b) feeding the flexible pipe into the downstream section of the primary pipe;
c) attaching a first and second port of the system to bridge the upstream and downstream sections, to again provide a flow path through the primary pipe;
d) attaching at least the third port to a valve that, when activated, allows the flow of fluid from the primary pipe into the first port and through to the third port, via the second port and the inner pipe.

Embodiments of the invention are further described hereinafter, by way of example only, with reference to the accompanying drawings, in which:
Figure 1 shows an embodiment of the present invention, where an inner pipe is arranged to carry water through to a second point in a plumbing system;
Figure 2 shows a further embodiment of the present invention where an inner pipe acts to take water away from a second point in a plumbing system;
Figure 3 shows a further embodiment of the present invention, that is uses two forms of flushing to improve fluid flow;
Figure 4 shows a further embodiment of the present invention; and
Figure 5 shows optional configurations for increasing turbulence at the second point in the primary pipe.

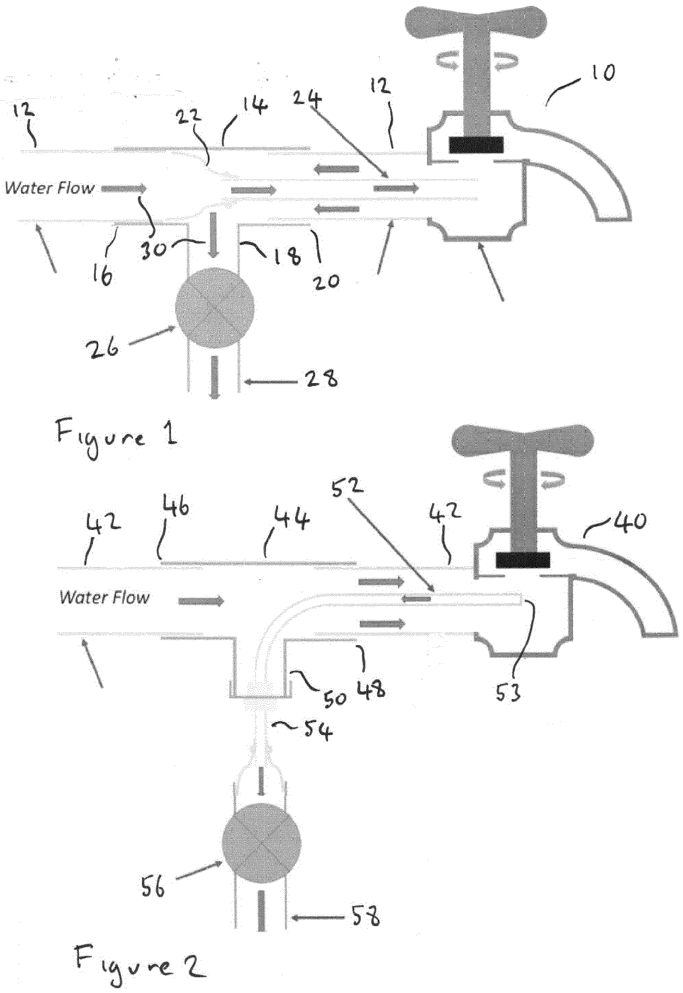

Figure 1 shows a first embodiment of the present invention installed in a plumbing system. An installation comprises of a water tap 10 connected to a primary pipe 12, which feeds the tap with water in conventional fashion. The tap 10 and pipe 12 are assumed to both be installed prior to fitting of an embodiment of the present invention.

The embodiment comprises of a tee-piece 14 having an inlet port 16, an exit port 18 and a further port 20. The tee-piece 14 has been spliced into the existing pipe 12 at a first point by removal of a piece of the pipe 12, and being inserted in its place. Inside the tee-piece 14 is a reducer 22 having a wider end connected near to the inlet port 16 and a narrower diameter end connected to an inner pipe 24. The reducer guides water flowing into the inlet port 16 and guides it to flow into the inner pipe 24. The inner pipe 24 is a flexible plastic pipe, having an open end at a second point, which in this case is inside the tap itself. The exit port 18 is connected to an automatic valve 26 and from there to a drain pipe 28. Of course, other embodiments may use different types of pipe, such as copper pipe etc.

When the tap is in normal use, i.e. when the valve 26 is closed, then the tap may be operated in standard fashion. With the tap turned on water will flow through the primary pipe 12 into the tee-piece, where it will be guided to flow through the inner pipe 24 and then out through the tap. Clearly, when the tap is used the water in the inner pipe 24 will be flushed through.

Taps are often placed in places where they may not get much use, such as in little used toilet facilities, or in storage or maintenance rooms etc. Hence, there may be standing water in the pipe for periods of time longer than is ideal, from a point of view of prevention of build-up of unwanted bacteria. So, to resolve this without having to have the tap manually activated, the valve 26 may be switched on (i.e. to allow the passage of fluid therethrough) automatically, e.g. using a timer, or a remote controller, to flush the water therefrom. When the valve 26 is switched on, and the tap 10 is off, then water will be drawn down from the pipe 12 into the tee-piece 14 and into the inner pipe 24, as is the case when the tap 10 is on. However, as the water cannot flow from the tap, it will exit the inner pipe 24 and flow back through the existing pipe 12 to the exit port 18 of the tee piece 14, and through the valve 26 and into a drain via pipe 28. This acts to flush out any standing water that is sitting between the first and second points. As the second point is, in this case, in the tap itself (as the inner pipe has been fed through to the tap inlet), the whole of the water system up to the tap can be flushed. Thus, the pipe 12 no longer has a dead leg region that doesn't get flushed by prior art flushing systems as described above. The water flow that occurs during a flushing cycle is indicated in Figure 1 by the arrows, e.g. 30.

When fitting this embodiment, a suitable sized section of the original, primary pipework is first removed, big enough to allow the fitting of the tee-piece. Then, the flexible tube 24 is pushed into the downstream section of the primary pipework as far as desired. Typically, a fitter would measure the distance to the tap or other fitting at the end of the primary pipework, and would select the size of the tube to reach down to that fitting. When that fitting is in place the tee-piece is connected up to the primary pipework in any convenient manner, such as with a push fit, the use of olives, crimping, or by soldering, as would be understood by a normally skilled person. The exit port is then connected to a valve, if necessary via some additional pipework to allow the valve to be sited in a convenient position. The valve is then connected to a drain pipe to drain the flushed water.

Figure 2 shows an alternative embodiment of the invention. This embodiment is again fitted so as to flush a tap 40 that is supplied by a water pipe 42. The embodiment comprises of a tee-piece 44 that is spliced into a first point of the primary pipe 42. The tee-piece has an input port 46 for connection to the upstream portion of the water pipe 42, a port 48 for connection to the downstream portion of the water pipe 42 and an exit port 50 for flushed water to pass through to a drain. The exit port 50 is connected to an inner pipe 52, through which water has to flow to escape from the exit port. The inner pipe 52 is a flexible pipe that, during fitting of the system, is fed into the downstream portion of the water pipe 42. The inner pipe 52 has an open port 53 that is positioned at a second point in the primary pipe, determined by how long a length of the inner pipe is fed into the primary pipe during fitting. The exit port 50 has a pipe 54 that directs water expelled therefrom through to an automatic valve 56 and onwards via pipework 58 to a drain.

When the valve 56 is closed, and water is demanded from the tap 40, water will flow through the upstream portion of the primary pipe 42, through the tee piece 46 and into the downstream portion of pipe 42 to the tap and out. If the valve 56 is opened to flush the primary pipework then a flow path will then be present along the primary pipe, through the tee-piece to the second point where the open port 53 of the inner pipe sits. The flow path will then go inside the inner pipe via the open port 53, back along the primary pipe to the exit port of the tee-piece. From there, it will go via connection pipe 54, through the valve 56 and along pipework 58 to a drain. Thus, the flow in this embodiment is the opposite of the case in the previous embodiments, with the directions reversed in the primary and inner pipes between the first and second points. The effect, of flushing through any standing water between those points, however, is the same.

The fitting of this embodiment into an existing primary pipe is very similar to that of the previous embodiment, and need not be described further.

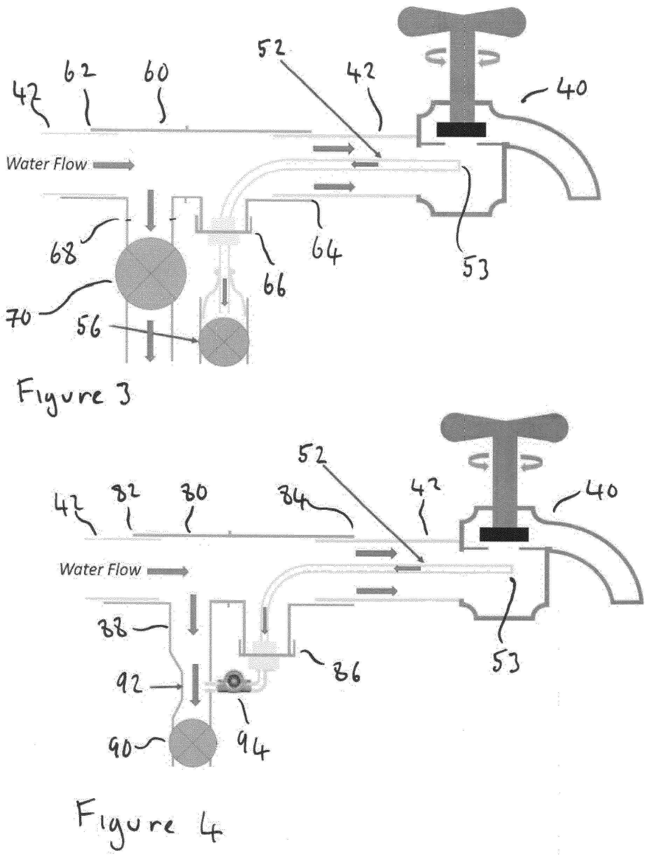

Figure 3 shows a further embodiment of the invention, that combines a flushing system similar that of Figure 2 along with a flushing system that is similar to a prior art system, to achieve the benefits of both. Elements that are the same as those of Figure 2 have been given the same reference numbers. This embodiment comprises of a four-port tee piece 60 having an inlet port 62 that is connected to a primary water pipe 42, a port 64 for providing water to an outlet 40, a first flushing port 66 that allows water to flow to a drain, via an inner pipe 52, and a second flushing port 68. The first flushing port 66 connects to an automatic valve 56, and it functions in similar manner to that of the embodiment described in relation to Figure 2. That is, when valve 56 is closed, then water is free to flow out through outlet 40 whenever the outlet 40 is turned on. When valve 56 is opened, then water is able to flow through tee-piece 60 from port 62 to port 64, along primary pipe 42, and back through inner pipe 52, via the open port 53 from where it flows through the valve 56 and onwards to a drain. This provides a flush of the primary pipe through to the location of the open port 53 on the inner pipe 52. The second flushing port 68 connects via pipework to a second automatic valve 70, and onwards to a drain.

Due to the relatively narrow inner pipe 52 (which must of course be narrower than the primary pipe 42) and the sharing of the bore of the primary pipe with the inner pipe, the flow rate achievable using the valve 56 is less than that that could be achieved via a flush that allows water to flow along the full bore of the primary pipe. Therefore, the second flushing port 68 is provided, that is upstream of the first flushing port 66, and therefore is unencumbered by the inner pipe connected to the first flushing port, and running downstream thereof. Hence, when the second valve 70 is activated, water is able to flow at full pressure from primary pipe 42 upstream of the port 68, though that port 68, and onwards to the drain. A full pressure flush is therefor achievable, which allows a faster flush time, and may be required in some countries for regulatory purposes.

The valves 56 and 70 may advantageously be operated simultaneously, so flushing the water system upstream of the tee-piece 60 with a full pressure flush, and also flushing the dead-leg part of the system downstream of the tee-piece 60 as far as the open port 53 of the inner pipe 52. Of course, when installing the flushing system, it is advantageous to run the inner pipe 52 as far down the primary pipe 52 as is possible, ideally right to the outlet 40, to allow flushing of as much of the dead-leg as is possible.

In this embodiment the valves 56, 70, may be arranged to be independently controllable, or they may be arranged so that they are both switched together, from a single switching command signal.

Figure 4 shows a further embodiment of the present invention. Here, shown installed in a primary pipe 42, is a four-port tee-piece 80, having an input port 82, an output port 84 for providing water to an outlet 40 via a downstream portion of primary pipe 42, a first flushing port 86, and a second flushing port 88. The embodiment has an inner pipe 52 inserted so as to pass into the downstream portion of primary pipe 42, and having an open port 53 at a second point along the primary pipe, again located within an outlet 40. The second flushing port goes via a short pipe to an automatic valve 90 and thence to a drain. Located in the short pipe between the second flushing port and the automatic valve is a constriction 92. Positioned at the constriction 92 is an inlet pipe 94 that comes from the first flushing port 86. Thus, the constriction 92, along with the inlet pipe 94 located at the constriction together form a venturi.

When automatic valve 90 is activated, it allows water to flow through from port 88, and the pipework and constriction 92 connected thereto, and the water flowing through the venturi constriction 92 speeds up the water flow at that point. As is well known, for an essentially incompressible fluid such as water, as it travels through a narrowing pipe, the speed of the flow will increase. Bernoulli's principle states that an increase in the speed of a fluid is accompanied by a decrease in static pressure. Thus, the local water pressure is reduced at the centre of the venturi constriction. As the pipe 94, that itself comes from pipe 52, joins at the constriction 92, the water pressure at this "venturi' end of the 94 pipe is reduced in comparison with the pressure at the open port 53 of the inner pipe. This is because the open port 53 of the inner pipe 52 is located within or adjacent the outlet 40 that is filled with, essentially static, water at the same pressure as that in the water supply pipe and primary water pipe 42. Water is thus pushed through the flushing pipe from the high-pressure end located in the body of the tap, to the low-pressure end located in the constricted section 92 of the pipe to the automatic valve 90.

So, looking at the flow of water through the system as a whole, when the automatic valve 90 is activated, the majority of the water will pass straight down to the drain via port 88 due to the direct flow path between ports 82 and 88, but a proportion of the water is passing into the dead leg, making its way to the second point in primary pipe 42 where open port 53 is located, then into the inner pipe 52, and then through the pipe 94, and the constriction and down to the drain via the valve 90. Water in the dead leg is thus being replenished by high pressure, fresh water from the feed pipe. The proportion of water supplied into the system that passes through the dead leg and then the flushing pipe will depend on several factors including the relative dimensions and geometries of the pipework, the relative dimensions and geometry of the venturi constriction and on the water pressure and flow rate passing into the drain. These factors can be assessed by a normally skilled person, who can then choose dimensions and flushing times to achieve a desired passing of water through the various elements of the system, e.g. to meet with regulatory requirements.

A variant of this embodiment may be used where a constriction, and hence a venturi is not used, and the outlet pipe 94 connects directly to the pipe from port 88. This will result in a lower flow rate from the port 86 however, and so is not preferred.

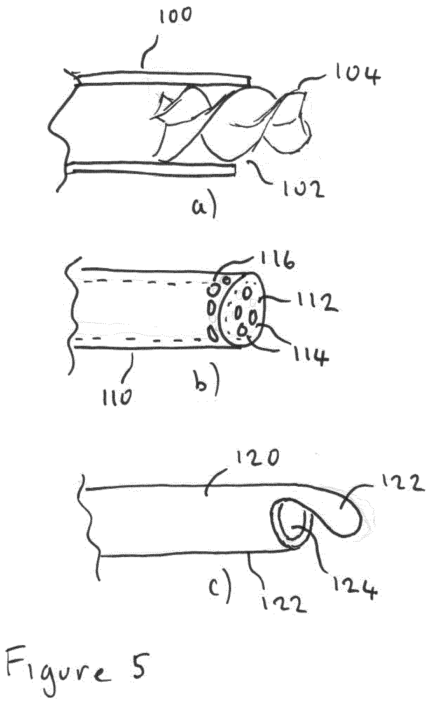

Figure 5 shows three examples of how, the open port of the inner pipe may be arranged, so as to induce a swirl, or turbulent flow as water is drawn into or out of the pipe during a flushing sequence. Figure 5a shows a part-sectional view of an inner pipe 100, having an open port 102 that comprises an insert 104 into the pipe 100, having a helical form (broadly similar to a piece of fusilli pasta) that allows passage of fluid through into, or out of pipe 100 in a fashion that induces helical flow of the fluid. This helical flow will tend to produce more turbulence around the open port 102 of the pipe 100, so making it more likely to flush fluid in the vicinity of the port 102.

Figure 5b shows an inner pipe 110 that has a cap 112 over an end thereof, that has holes 114 allowing flow out therefrom. Further holes 116 are provided around the circumference of the pipe 110 very close to the end allowing flow out therefrom in a direction perpendicular to the flow of water in the pipe itself. The holes 114, 116 together constitute the open port of the inner pipe. This again tends to produce a more turbulent flow in the vicinity of the open port. This design is more suited to those embodiments of the invention where, during a flushing operation, fluid is directed from the first port into the inner pipe, using a constrictor, so that the flow is only going outwards from the open port of the inner pipe into the primary pipe at the second point.

Figure 5c shows a further example of an open port design that may be used to improve the turbulence as the water flows into or out from the inner pipe during a flushing operation. A pipe 120 having a circumferential wall 122 has an opening 124 permitting flow therethrough. A part of the wall 122 of the pipe has been extended to pass beyond the opening 122 to create a wing, that induces turbulence as fluid flows around it.

The automatic valves 26, 56, 70, 90, in the above embodiments, may be activated by a time switch, or may be connected to a remote controller located, e.g. in a control room, where they may be activated by an operator, or by a computer etc. The automatic valves may be arranged to be wired, or wirelessly controlled, and may be assigned addresses, such as with an internet protocol (IP) address, and controlled, and appropriated sequenced, when installed in multiple areas, via the internet, or some other network. They may be controlled via a wireless device, such as from an app running on a mobile device such as a smart phone or the like. The app (or other system from which the valves are controlled) may be arranged to record which valves have been flushed, for low long, and when, for regulatory and/or maintenance purposes.

## Claims

1. A flushing system for flushing fluid through a primary pipe (12) between a first point on the primary pipe, and a second point downstream thereof, the system comprising of an additional, inner pipe (24) arranged, in use, to sit within the primary pipe (12), and having an open port at the second point (53), and wherein a fluid path is provided to allow fluid to flow down one of the primary (12) or additional inner pipe (24), through the open port (53), and back through the other pipe to the first point, and further wherein an exit port (18) is provided at the first point for the fluid, wherein the system comprises of a unit, suitable for fitting to the primary pipe at the first point, **characterised in that** the unit has at least three ports, wherein a first port is adapted to be connected to an upstream portion of the primary pipe, a second port is adapted to be connected to a downstream portion of the primary pipe, and wherein the exit port comprises of the third port, and wherein the third port (18) has fitted thereto, or downstream thereof, a valve (26) for respectively allowing or stopping the flow of fluid therefrom.

2. A flushing system as claimed in claim 1 wherein the unit comprises means, for directing fluid flowing into the first port to flow only through the inner pipe towards the second point (53), and wherein a fluid flow path exists between the second point, back along the primary pipe, into the second port and then to the exit port (18).

3. A flushing system as claimed in claim 2 wherein the means for directing the flow of fluid only through the inner pipe (24) comprises a constriction (22) between the inside of an outer pipe, and an entrance port to the inner pipe, wherein the outer pipe is one of: a) the primary pipe (12), or b) a pipe (14) that forms part of the unit that may be fitted to the primary pipe, said outer pipe being of larger diameter than the inner pipe.

4. A flushing system as claimed in claim 1 wherein the additional, inner pipe (24) provides a flow path from the second point (53) within the primary pipe to the exit port (18), whereby the additional inner pipe passes through the second port of the unit and terminates at the third port to provide the exit port.

5. A flushing system as claimed in claim 4 wherein, when fitted into a primary pipe, a fluid path exists from the first port to the second port(53), and then into the downstream portion (42) of the primary pipe.

6. A flushing system as claimed in any of the above claims wherein the valve (26) is an automatically operatable valve.

7. A flushing system as claimed in any of the above claims wherein a fourth port is provided, located upstream of the third port, and which is connected to an automatic valve (70, 90), and has a fluid path direct to the first port, to allow flushing of water primarily present in the primary pipe upstream of the exit port when the automatic valve to which it is connected is open.

8. A flushing system as claimed in claim 7, wherein the valve connected to the third port (90) is the same valve as connects to the fourth port (90).

9. A flushing system as claimed in claim 8 wherein the system further comprises a constriction (92) in a flow path from the fourth port to the valve, and wherein a flow path from the third port to the valve connects at the constriction, to form a venturi that acts to draw fluid through the third port (86) as fluid flows from the fourth port (88).

10. A flushing system as claimed in any of the above claims wherein the ports are of a size compatible with plumbing fittings, and comprise of 15mm or 22mm outside diameter pipe.

11. A flushing system as claimed in any of the above claims wherein the additional pipe has a fitting (102) or form (112, 122) at the open port (102) that is shaped to induce a swirl as water flows through the port.

12. A flushing system as claimed in any of the above claims wherein the additional pipe (24) is a flexible pipe.

13. A flushing system as claimed in any of the above claims wherein the additional pipe (24) has an internal bore of diameter between 5 and 10mm.

14. A method of installing a flushing system as described in any of the above claims, the system having a unit having least three ports (46, 48, 53) and an inner pipe (24), the method comprising:
a) cutting a section out of a primary pipe to leave an upstream and a downstream section thereof;
b) feeding the inner pipe into the downstream section (42) of the primary pipe;
c) attaching a first and second port of the system to bridge the upstream and downstream sections, to again provide a flow path through the primary pipe;
d) attaching at least a third port (53) to a valve that, when activated, allows the flow of fluid from the primary pipe into the first port and through to the third port, via the second port and the inner pipe.

## Patentansprüche

1. Spülsystem zum Spülen von Fluid durch ein primäres Rohr (12) zwischen einer ersten Stelle an dem primären Rohr und einer zweiten Stelle stromabwärts davon, wobei das System ein zusätzliches, inneres Rohr (24) umfasst, das im Gebrauch so angeordnet ist, dass es innerhalb des primären Rohrs (12) liegt und an der zweiten Stelle (53) einen offenen Anschluss aufweist, und wobei ein Fluidpfad bereitgestellt ist, um zu ermöglichen, dass Fluid nach unten durch das primäre (12) oder zusätzliche innere Rohr (24), durch den offenen Anschluss (53) und zurück durch das andere Rohr zu der ersten Stelle strömt, und wobei ferner ein Austrittsanschluss (18) an der ersten Stelle für das Fluid bereitgestellt ist, wobei das System eine Einheit umfasst, die zum Montieren an dem primären Rohr an der ersten Stelle geeignet ist, **dadurch gekennzeichnet, dass** die Einheit mindestens drei Anschlüsse aufweist, wobei ein erster Anschluss angepasst ist, um mit einem stromaufwärtigen Abschnitt des primären Rohrs verbunden zu werden, ein zweiter Anschluss angepasst ist, um mit einem stromabwärtigen Abschnitt des primären Rohrs verbunden zu werden, und wobei der Austrittsanschluss den dritten Anschluss umfasst und wobei der dritte Anschluss (18) daran oder stromabwärts davon ein Ventil (26) zum jeweiligen Ermöglichen oder Stoppen des Stroms von Fluid davon montiert hat.

2. Spülsystem nach Anspruch 1, wobei die Einheit Mittel umfasst, um Fluid, das in den ersten Anschluss strömt, so zu leiten, dass es nur durch das innere Rohr zu der zweiten Stelle (53) strömt, und wobei ein Fluidströmungspfad zwischen der zweiten Stelle, zurück entlang des primären Rohrs, in den zweiten Anschluss und dann zu dem Austrittsanschluss (18) vorhanden ist.

3. Spülsystem nach Anspruch 2, wobei das Mittel zum Leiten des Fluidstroms nur durch das innere Rohr (24) eine Verengung (22) zwischen der Innenseite eines äußeren Rohrs und einem Eintrittsanschluss in das innere Rohr umfasst, wobei das äußere Rohr eines von Folgendem ist: a) dem primären Rohr (12) oder b) einem Rohr (14), das einen Teil der Einheit bildet, die an dem primären Rohr montiert werden kann, wobei das äußere Rohr einen größeren Durchmesser als das innere Rohr hat.

4. Spülsystem nach Anspruch 1, wobei das zusätzliche innere Rohr (24) einen Strömungspfad von der zweiten Stelle (53) innerhalb des primären Rohrs zu dem Austrittsanschluss (18) bereitstellt, wobei das zusätzliche innere Rohr durch den zweiten Anschluss der Einheit verläuft und an dem dritten Anschluss endet, um den Austrittsanschluss bereitzustellen.

5. Spülsystem nach Anspruch 4, wobei bei Montage in ein primäres Rohr ein Fluidpfad von dem ersten Anschluss zu dem zweiten Anschluss (53) und dann in den stromabwärtigen Abschnitt (42) des primären Rohrs vorhanden ist.

6. Spülsystem nach einem der vorhergehenden Ansprüche, wobei das Ventil (26) ein automatisch betätigbares Ventil ist.

7. Spülsystem nach einem der vorhergehenden Ansprüche, wobei ein vierter Anschluss bereitgestellt ist, der sich stromaufwärts des dritten Anschlusses befindet und der mit einem automatischen Ventil (70, 90) verbunden ist und einen Fluidpfad direkt zu dem ersten Anschluss aufweist, um ein Spülen von Wasser zu ermöglichen, das hauptsächlich in der primären Leitung stromaufwärts des Austrittsanschlusses vorhanden ist, wenn das automatische Ventil, mit dem es verbunden ist, offen ist.

8. Spülsystem nach Anspruch 7, wobei das Ventil, das mit dem dritten Anschluss (90) verbunden ist, dasselbe Ventil ist, das mit dem vierten Anschluss (90) verbunden ist.

9. Spülsystem nach Anspruch 8, wobei das System ferner eine Verengung (92) in einem Strömungspfad von dem vierten Anschluss zu dem Ventil umfasst und wobei ein Strömungspfad von dem dritten Anschluss zu dem Ventil an der Verengung verbunden ist, um ein Venturi zu bilden, das wirkt, um Fluid durch den dritten Anschluss (86) zu saugen, wenn Fluid von dem vierten Anschluss (88) strömt.

10. Spülsystem nach einem der vorhergehenden Ansprüche, wobei die Anschlüsse eine Größe haben, die mit Sanitärformstücken kompatibel ist, und ein Rohr mit einem Außendurchmesser von 15 mm oder 22 mm umfassen.

11. Spülsystem nach einem der vorhergehenden Ansprüche, wobei das zusätzliche Rohr ein Formstück (102) oder eine Form (112, 122) an dem offenen Anschluss (102) aufweist, das/die so geformt ist, dass es/sie einen Wirbel induziert, wenn Wasser durch den Anschluss strömt.

12. Spülsystem nach einem der vorhergehenden Ansprüche, wobei das zusätzliche Rohr (24) ein flexibles Rohr ist.

13. Spülsystem nach einem der vorhergehenden Ansprüche, wobei das zusätzliche Rohr (24) eine Innenbohrung mit einem Durchmesser zwischen 5 und 10 mm aufweist.

14. Verfahren zum Installieren eines Spülsystems wie in einem der vorhergehenden Ansprüche beschrieben, wobei das System eine Einheit mit mindestens drei Anschlüssen (46, 48, 53) und einem inneren Rohr (24) aufweist, wobei das Verfahren Folgendes umfasst:
a) Ausschneiden eines Teilabschnitts aus einem primären Rohr, um einen stromaufwärtigen und einen stromabwärtigen Teilabschnitt davon beizubehalten;
b) Zuführen des inneren Rohrs in den stromabwärtigen Teilabschnitt (42) des primären Rohrs;
c) Anbringen eines ersten und zweiten Anschlusses des Systems, um den stromaufwärtigen und stromabwärtigen Teilabschnitt zu überbrücken, um erneut einen Strömungspfad durch das primären Rohr bereitzustellen;
d) Anbringen mindestens eines dritten Anschlusses (53) an einem Ventil, das bei Aktivierung den Strom von Fluid von dem primären Rohr in den ersten Anschluss und durch den dritten Anschluss über den zweiten Anschluss und das innere Rohr ermöglicht.

## Revendications

1. Système de chasse d'eau pour chasser un fluide à travers un tuyau principal (12) entre un premier point sur le tuyau principal, et un second point en aval de celui-ci, le système se composant d'un tuyau intérieur supplémentaire (24) agencé, lors de l'utilisation, pour reposer au sein du tuyau principal (12), et présentant un orifice ouvert au niveau du second point (53), et dans lequel un trajet de fluide est prévu pour permettre à du fluide de s'écouler vers le bas dans l'un du tuyau principal (12) ou du tuyau intérieur supplémentaire (24), à travers l'orifice ouvert (53), et de revenir à travers l'autre tuyau vers le premier point, et en outre dans lequel un orifice de sortie (18) est prévu au niveau du premier point pour le fluide, dans lequel le système se compose d'une unité, appropriée pour s'ajuster au tuyau principal au niveau du premier point, **caractérisé en ce que** l'unité présente au moins trois orifices, dans lequel un premier orifice est ajusté pour être relié à une partie amont du tuyau principal, un deuxième orifice est ajusté pour être relié à une partie aval du tuyau principal, et dans lequel l'orifice de sortie se compose du troisième orifice, et dans lequel le troisième orifice (18) présente une vanne (26) ajustée sur celui-ci ou en aval de celui-ci, pour permettre ou arrêter respectivement l'écoulement de fluide à partir de celui-ci.

2. Système de chasse d'eau selon la revendication 1, dans lequel l'unité comprend un moyen, pour diriger du fluide s'écoulant dans le premier orifice afin qu'il s'écoule uniquement à travers le tuyau intérieur en direction du second point (53), et dans lequel un trajet d'écoulement de fluide existe entre le second point, en revenant le long du tuyau principal, dans le deuxième orifice, puis vers l'orifice de sortie (18).

3. Système de chasse d'eau selon la revendication 2, dans lequel le moyen pour diriger l'écoulement de fluide uniquement à travers le tuyau intérieur (24) comprend un étranglement (22) entre le sein d'un tuyau externe et un orifice d'entrée vers le tuyau intérieur, dans lequel le tuyau externe est l'un parmi : a) le tuyau principal (12), ou b) un tuyau (14) qui fait partie de l'unité qui peut être ajustée sur le tuyau principal, ledit tuyau externe étant d'un diamètre plus grand que le tuyau intérieur.

4. Système de chasse d'eau selon la revendication 1, dans lequel le tuyau intérieur supplémentaire (24) fournit un trajet d'écoulement à partir du second point (53) au sein du tuyau principal vers l'orifice de sortie (18), moyennant quoi le tuyau intérieur supplémentaire passe à travers le deuxième orifice de l'unité et se termine au niveau du troisième orifice pour fournir l'orifice de sortie.

5. Système de chasse d'eau selon la revendication 4, dans lequel, lorsqu'il est ajusté dans un tuyau principal, un trajet de fluide existe à partir du premier orifice vers le deuxième orifice (53), puis dans la partie aval (42) du tuyau principal.

6. Système de chasse d'eau selon l'une quelconque des revendications ci-dessus, dans lequel la vanne (26) est une vanne à fonctionnement automatique.

7. Système de chasse d'eau selon l'une quelconque des revendications ci-dessus, dans lequel un quatrième orifice est prévu, situé en amont du troisième orifice, et qui est relié à une vanne automatique (70, 90), et présente un trajet de fluide direct vers le premier orifice, pour permettre une chasse de l'eau principalement présente dans le tuyau principal en amont de l'orifice de sortie lorsque la vanne automatique à laquelle il est relié est ouverte.

8. Système de chasse d'eau selon la revendication 7, dans lequel la vanne reliée au troisième orifice (90) est la même vanne que celle reliée au quatrième orifice (90).

9. Système de chasse d'eau selon la revendication 8, dans lequel le système comprend en outre un étranglement (92) dans un trajet d'écoulement à partir du quatrième orifice vers la vanne, et dans lequel un trajet d'écoulement à partir du troisième orifice vers la vanne se relie au niveau de l'étranglement, pour former un venturi qui agit pour aspirer du fluide à travers le troisième orifice (86) lorsque du fluide s'écoule à partir du quatrième orifice (88).

10. Système de chasse d'eau selon l'une quelconque des revendications ci-dessus, dans lequel les orifices sont d'une taille compatible avec des raccords de plomberie et se composent d'un tuyau de diamètre extérieur de 15 mm ou 22 mm.

11. Système de chasse d'eau selon l'une quelconque des revendications ci-dessus, dans lequel le tuyau supplémentaire présente un raccord (102) ou une forme (112, 122) au niveau de l'orifice ouvert (102) qui est façonné pour induire un tourbillon lorsque de l'eau s'écoule à travers l'orifice.

12. Système de chasse d'eau selon l'une quelconque des revendications ci-dessus, dans lequel le tuyau supplémentaire (24) est un tuyau souple.

13. Système de chasse d'eau selon l'une quelconque des revendications ci-dessus, dans lequel le tuyau supplémentaire (24) présente un alésage interne d'un diamètre compris entre 5 et 10 mm.

14. Procédé d'installation d'un système de chasse d'eau tel que décrit dans l'une quelconque des revendications ci-dessus,
le système présentant une unité présentant au moins trois orifices (46, 48, 53) et un tuyau intérieur (24), le procédé comprenant :
a) la découpe d'une section d'un tuyau principal pour en laisser une section amont et une section aval ;
b) l'introduction du tuyau intérieur dans la section aval (42) du tuyau principal ;
c) la fixation d'un premier et d'un deuxième orifice du système pour relier les sections amont et aval, pour fournir à nouveau un trajet d'écoulement à travers le tuyau principal ;
d) la fixation d'au moins un troisième orifice (53) à une vanne qui, lorsqu'elle est activée, permet l'écoulement de fluide à partir du tuyau principal dans le premier orifice et à travers le troisième orifice, par l'intermédiaire du deuxième orifice et du tuyau intérieur.
